# EUROPEAN PATENT APPLICATION

(11) **EP 3 379 618 A1**
(43) Date of publication of application: **26.09.2018**
(21) Application number: 16866636.0
(22) Date of filing: 16.11.2016
(51) Int. Cl.: H01M 4/38, H01M 4/587, H01M 4/36, H01M 4/134, H01M 4/133

(54) **ELECTRODE MATERIAL AND PREPARATION METHOD THEREFOR**

(30) Priority: 17.11.2015 KR 20150160956
(71) Applicant: IUCF-HYU (Industry-University Cooperation Foundation Hanyang University), Seoul 04763 (KR)
(72) Inventor: SUN, Yangkook, Seoul 06284 (KR); LEE, Joohyeong, Seoul 04790 (KR)
(74) Representative: dompatent von Kreisler Selting Werner - Partnerschaft von Patent- und Rechtsanwälten mbB
(86) International application number: PCT/KR2016/013175
(87) International publication number: WO 2017/086684

(57) **Abstract**

A method for manufacturing an electrode material includes preparing silicon oxide, reducing at least a portion of the silicon oxide to form a first composite including an aggregate in which silicon oxide particles and silicon particles are aggregated, selectively removing the silicon oxide particles of the first composite to form a second composite including an aggregate in which the silicon particles are aggregated, and forming a third composite by dry-mixing and cold-welding the second composite and a carbon material.

## Description

### CROSS-REFERENCE TO RELATED APPLICATION

This application is a continuation of pending International Application No. PCT/KR2016/013175, which was filed on November 16, 2016 and claims priority to Korean Patent Application No. 10-2015-0160956, filed on November 17, 2015, in the Korean Intellectual Property Office, the disclosures of which are hereby incorporated by reference in their entireties.

### BACKGROUND

### 1. Field

The present disclosure relates to an electrode material and a method for manufacturing the same, and more particularly, to an electrode material including a composite formed by dry-mixing and cold-welding a porous silicon aggregate and a carbon material, and a method for manufacturing the same.

### 2. Description of the Related Art

A secondary battery industry has entered into a new growth period due to the increasing demand for medium and large-sized secondary batteries used in electric cars and energy storage systems. In particular, as a secondary battery market has been greatly expanded with lithium secondary batteries, lithium secondary batteries for electric cars as well as mobile IT devices (e.g., portable phones) have been increasingly demanded. In addition, energy storage techniques capable of acting as a buffer between production and consumption of electric power have been studied to realize the 21st century power network represented by the smart grid.

Thus, stability and high capacity of lithium secondary batteries applied to electric cars and medium and large-sized energy storage devices have been actively studied.

For example, Korean Patent Publication No. KR20130031079A (Applicant: LG Chem, Ltd., Application No. KR20110094787A) discloses a technique of preparing a positive electrode material for a high-capacity lithium secondary battery, which is a positive active material including a lithium-manganese-based oxide having a layered structure. In the positive electrode material, a content of Mn is greater than those of other transition metals and a mole number of Li is one or more times greater than that of a transition metal including Mn. In addition, a gas such as oxygen and carbon dioxide may be released in a flat level period shown together with lithium deintercalation when an initial charging operation is performed in a high-voltage range of 4.4V or more, and thus the high-capacity lithium secondary battery may output high output power usable as power sources of medium and large-sized devices (e.g., HEV, PHEV, and EV) and may stably maintain the output power in a use SOC period.

To commercialize electric cars and medium and large-sized energy storage devices, it is required to study a material and a structure of an electrode, which are capable of improving charge/discharge characteristics and life span of a battery as well as stability and capacity of the battery.

### SUMMARY

The present disclosure may provide an electrode material with improved electrical conductivity and a method for manufacturing the same.

The present disclosure may also provide an electrode material capable of securing high capacity of a battery and a method for manufacturing the same.

The present disclosure may further provide an electrode material capable of improving charge/discharge efficiency of a battery and a method for manufacturing the same.

The present disclosure may further provide an electrode material capable of improving life span and reliability of a battery and a method for manufacturing the same.

The present disclosure may further provide an electrode material capable of reducing a process cost and a process time and a method for manufacturing the same.

The present disclosure may further provide an electrode material with high tap density and high composite density and a method for manufacturing the same.

The present disclosure may further provide an electrode material of a lithium silicon secondary battery having high reliability and a method for manufacturing the same.

In an aspect, a method for manufacturing an electrode material may include preparing silicon oxide, reducing at least a portion of the silicon oxide to form a first composite including an aggregate in which silicon oxide particles and silicon particles are aggregated, selectively removing the silicon oxide particles of the first composite to form a second composite including an aggregate in which the silicon particles are aggregated, and forming a third composite by dry-mixing and cold-welding the second composite and a carbon material.

In an embodiment, the third composite may include an aggregate of the silicon particles and the carbon material mixed with the aggregate of the silicon particles.

In an embodiment, the reducing of at least a portion of the silicon oxide to form the first composite may include thermally treating the silicon oxide to reduce at least a portion of the silicon oxide to the silicon particles.

In an embodiment, the selective removing of the silicon oxide particles of the first composite to form the second composite may include performing a wet etching process to remove the silicon oxide particles of the first composite while leaving the silicon particles of the first composite.

In an embodiment, the second composite may include voids formed by the removal of the silicon oxide particles and an aggregate of the remaining silicon particles.

In an embodiment, the aggregate in which the silicon particles are aggregated may be fractured and re-aggregated during the dry-mixing and the cold-welding of the second composite and the carbon material.

In an embodiment, the forming of the third composite may include dry-mixing and cold-welding the second composite and the carbon material in such a way that the carbon material is adhered to the aggregate of the silicon particles or at least a portion of the carbon material is inserted into the aggregate of the silicon particles.

In an embodiment, the forming of the third composite may include dry-mixing and cold-welding the second composite and the carbon material by a spex mill or a mixer mill.

In an embodiment, a size of the carbon material may decrease as a frequency and/or a mixing time of the spex mill or the mixer mill increases.

In an embodiment, a size of the formed third composite may decrease as a frequency and/or a mixing time of the spex mill or the mixer mill increases.

In an aspect, an electrode material may include a porous silicon aggregate, and a carbon material adhered to a surface of the porous silicon aggregate and permeating into the porous silicon aggregate.

In an embodiment, a weight ratio of the carbon material may be 15wt%.

In an embodiment, the porous silicon aggregate may have a micro size, and nano-sized silicon particles may be aggregated in the porous silicon aggregate.

### BRIEF DESCRIPTION OF THE DRAWINGS

FIG. 1 is a flowchart illustrating a method for manufacturing an electrode material according to some embodiments of the inventive concepts.
FIG. 2 is a schematic view illustrating a method for manufacturing an electrode material according to some embodiments of the inventive concepts.
FIG. 3 is an enlarged view of a portion 'A' of FIG. 2 to illustrate a first composite formed according to some embodiments of the inventive concepts.
FIG. 4 is an enlarged view of a portion 'B' of FIG. 2 to illustrate a second composite formed according to some embodiments of the inventive concepts.
FIG. 5 is an enlarged view of a portion 'C' of FIG. 2 to illustrate a third composite formed according to some embodiments of the inventive concepts.
FIG. 6 shows graphs of charge/discharge characteristics according to an increase in the number of charge/discharge cycle and an increase in current value of batteries including electrode materials according to an embodiment of the inventive concepts and a comparative example.
FIG. 7 shows shapes of an electrode material according to a frequency and a mixing time of a mixer mill in manufacturing of the electrode material according to embodiments of the inventive concepts.
FIG. 8 is a graph showing charge/discharge characteristics according to a weight of carbon nanotube and a mixing time of a mixer mill as the number of charge/discharge cycles increases.
FIG. 9 shows scanning electron microscope (SEM) and transmission electron microscope (TEM) images of electrode materials according to embodiments of the inventive concepts.
FIG. 10 is an enlarged SEM image of (c) of FIG. 9 to show an electrode material according to an embodiment of the inventive concepts.
FIG. 11 shows FIB-SEM and FIB-TEM images of an electrode material according to an embodiment of the inventive concepts.
FIG. 12 shows TEM and HRTEM images of an electrode material according to an embodiment of the inventive concepts.
FIG. 13 is a Raman analysis graph of carbon nanotube and an electrode material according to an embodiment of the inventive concepts.
FIG. 14 is an impedance graph of electrode materials according to an embodiment of the inventive concepts and a comparative example.
FIG. 15 is an X-ray diffraction (XRD) graph of electrode materials according to an embodiment of the inventive concepts and a comparative example.
FIG. 16 is a Fourier transform infrared (FT-IR) graph of electrode materials according to an embodiment of the inventive concepts and a comparative example.
FIG. 17 is a schematic block diagram illustrating a car including a secondary battery to which an electrode material according to some embodiments of the inventive concepts is applied.

### DETAILED DESCRIPTION OF THE EMBODIMENTS

The inventive concepts will now be described more fully hereinafter with reference to the accompanying drawings, in which exemplary embodiments of the inventive concepts are shown. It should be noted, however, that the inventive concepts are not limited to the following exemplary embodiments, and may be implemented in various forms. Accordingly, the exemplary embodiments are provided only to disclose the inventive concepts and let those skilled in the art know the category of the inventive concepts.

It will be understood that when an element such as a layer, region or substrate is referred to as being "on" another element, it can be directly on the other element or intervening elements may be present. In addition, in the drawings, the thicknesses of layers and regions are exaggerated for clarity.

It will be also understood that although the terms first, second, third etc. may be used herein to describe various elements, these elements should not be limited by these terms. These terms are only used to distinguish one element from another element. Thus, a first element in some embodiments could be termed a second element in other embodiments without departing from the teachings of the present invention. Exemplary embodiments of aspects of the present inventive concepts explained and illustrated herein include their complementary counterparts. As used herein, the term "and/or" includes any and all combinations of one or more of the associated listed items.

The terminology used herein is for the purpose of describing particular embodiments only and is not intended to limit the invention. As used herein, the singular terms "a", "an" and "the" are intended to include the plural forms as well, unless the context clearly indicates otherwise. It will be further understood that the terms "comprises", "comprising", "includes", "including", "have", "has" and/or "having" when used herein, specify the presence of stated features, integers, steps, operations, elements, and/or components, but do not preclude the presence or addition of one or more other features, integers, steps, operations, elements, components, and/or groups thereof. Furthermore, it will be understood that when an element is referred to as being "connected" or "coupled" to another element, it may be directly connected or coupled to the other element or intervening elements may be present.

In addition, in explanation of the present invention, the descriptions to the elements and functions of related arts may be omitted if they obscure the subjects of the inventive concepts.

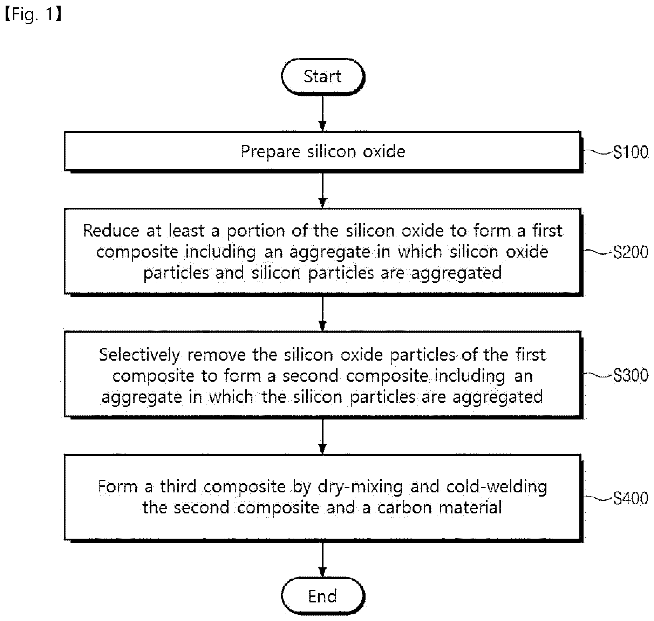

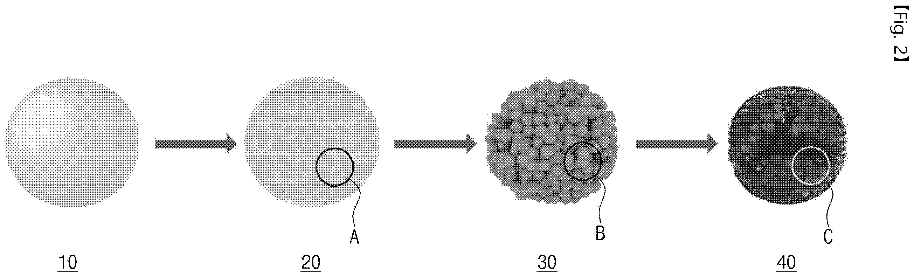

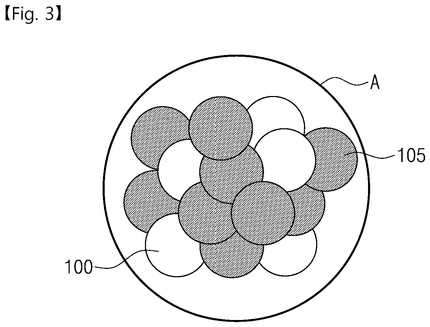

FIG. 1 is a flowchart illustrating a method for manufacturing an electrode material according to some embodiments of the inventive concepts, and FIG. 2 is a schematic view illustrating a method for manufacturing an electrode material according to some embodiments of the inventive concepts. FIGS. 3 to 5 are enlarged views of portions 'A', 'B' and 'C' of FIG. 2, respectively.

Referring to FIGS. 1 to 5, silicon oxide 10 may be prepared (S100). According to an embodiment, the silicon oxide 10 may be an aggregate of silicon oxide particles 100. According to an embodiment, the silicon oxide 10 may be silicon monoxide (SiO).

The silicon oxide 10 may be thermally treated to reduce at least some of the silicon oxide particles 100 of the silicon oxide 10 to silicon particles 105, thereby forming a first composite 20 including an aggregate in which the silicon oxide particles 100 and the silicon particles 105 are aggregated (S200). For example, a heating apparatus used in the thermal treatment may be a reducing furnace. For example, the silicon oxide 10 may be thermally treated at 970 degrees Celsius for 30 hours in the reducing furnace while an argon (Ar) gas and/or a hydrogen (H2) gas is supplied into the reducing furnace.

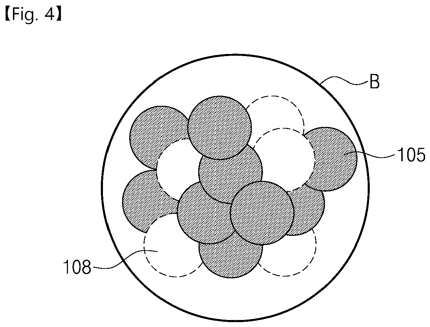

The silicon oxide particles 100 of the first composite 20 may be selectively removed to form a second composite 30 including an aggregate in which the silicon particles 105 are aggregated (S300). For example, the process of selectively removing the silicon oxide particles 100 may include wet-etching the first composite 20. For example, the wet etching process may be performed for 4 hours. In other words, in the wet etching process, an etching solution (e.g., a hydrogen fluoride (HF) solution) may be provided to the first composite 20 to selectively remove the silicon oxide particles 100 among the silicon oxide particles 100 and the silicon particles 105 of the first composite 20 while leaving the silicon particles 105. Thus, the second composite 30 which includes voids 108 formed by the removal of the silicon oxide particles 100 and the aggregate of the remaining silicon particles 105 may be formed as illustrated in FIG. 4. For example, a method of providing the etching solution to the first composite 20 may include immersing the first composite 20 in the etching solution. The second composite 30 formed by the wet etching process may be obtained by a filtering process.

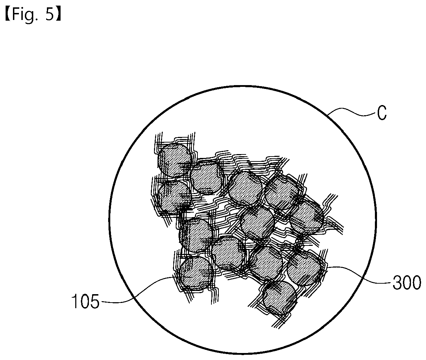

A third composite 40 may be formed by dry-mixing and cold-welding the second composite 30 and a carbon material 300 (S400). The aggregate of the silicon particles 105 may be fractured and re-aggregated during the dry-mixing and the cold-welding of the second composite 30 and the carbon material 300. While the aggregate of the silicon particles 105 is fractured and re-aggregated, the carbon material 300 may be adhered to a surface of the aggregate of the silicon particles 105 and/or at least a portion of the carbon material 300 may be inserted into the aggregate of the silicon particles 105, as illustrated in FIG. 5. In other words, the third composite 40 in which the aggregate of the silicon particles 105 and the carbon material 300 are uniformly mixed with each other may be formed by the dry-mixing and the cold-welding of the second composite 30 and the carbon material 300. Thus, electrical conductivity of the silicon particles 105 may be improved by the carbon material 300. For example, the carbon material 300 may be carbon nanotube.

If a weight ratio of the carbon material 300 in the third composite 40 is less or greater than 15wt%, charge/discharge characteristics of a secondary battery manufactured using the third composite 40 as an electrode material may be deteriorated. Thus, according to an embodiment, the weight ratio of the carbon material 300 in the third composite 40 may be 15wt%.

The dry-mixing and the cold-welding may be performed using a spex mill process or a mixer mill process. As frequencies and/or mixing times of the spex mill and the mixer mill increase, an original shape of the carbon material 300 may be fractured and the aggregate of the silicon particles 105 may be fractured. Thus, sizes of the silicon particles 105 may be reduced to nano sizes. As a result, as the frequencies and/or the mixing times of the spex mill and the mixer mill increase, a size of the third composite 40 formed by the re-aggregation of the second composite 30 and the carbon material 300 may decrease. If the frequencies and the mixing times of the spex mill and the mixer mill are greater than 20Hz and 30 minutes, respectively, the shape of the carbon material 300 may be excessively fractured. If the frequencies and the mixing times of the spex mill and the mixer mill are less than 20Hz and 30 minutes, respectively, it may not be easy to uniformly mix the second composite 30 and the carbon material 300 with each other. Thus, if the frequencies and the mixing times of the spex mill and the mixer mill are greater or less than 20Hz and 30 minutes, respectively, electrical conductivity of the third composite 40 in which the second composite 30 is mixed with the carbon material 300 may be deteriorated. As a result, according to an embodiment, the frequency and the mixing time of the spex mill or the mixer mill may be 20Hz and 30 minutes, respectively.

In addition, the size of the third composite 40 formed by the re-aggregation of the nano-sized silicon particles 105 and the carbon material 300 by mechanical energy of the spex mill or the mixer mill may be a micro size. When nano-sized silicon is used as the electrode material, it may be easy to control volume expansion of an electrode according to an increase in charge/discharge cycle of a battery. In addition, when micro-sized silicon is used as an electrode material, a tap density and a composite density of a battery may be improved. Thus, when the third composite 40 according to the embodiments of the inventive concepts is used as the electrode material, a battery including the third composite 40 may have both advantages of the battery using the nano-sized silicon as the electrode material and advantages of the battery using the micro-sized silicon as the electrode material.

In addition, while the aggregate of the silicon particles 105 is fractured and re-aggregated, the sizes of the silicon particles 105 may be reduced to the nano sizes and at the same time, planes having different orientations may be generated on surfaces of the silicon particles 105. A lot of defects, dislocations and/or grain boundaries may be generated on the planes which have the different orientations and are generated on the surfaces of the silicon particles 105. As the number of the planes on which the defects, the dislocations and/or the grain boundaries are generated increases on the surfaces of the silicon particles 105, reactivity of the silicon particles 105 with air may be lowered. Thus, when the silicon particles 105 are in contact with air, it is possible to minimize a thickness of silicon oxide generated on the surfaces of the silicon particles 105 by oxidation reaction between the air and the silicon particles 105.

In other words, by dry-mixing and cold-welding the second composite 30 and the carbon material 300, the sizes of the silicon particles 105 of the third composite 40 may be less than the sizes of the silicon particles 105 of the second composite 30. Thus, a surface area of the third composite 40 may be increased, and the number of the planes having the different orientations and the defects, the dislocations and/or the grain boundaries may be increased. As a result, when a battery is manufactured using the third composite 40 as an electrode material, the thickness of the silicon oxide generated on the surfaces of the silicon particles 105 of the third composite 40 by the oxidation reaction with air may be minimized to prevent performance of the battery from being deteriorated.

Unlike the aforementioned embodiments of the inventive concepts, if a silicon material having a bulk structure is used as an electrode material, it may be difficult to control volume expansion of an electrode according to an increase in charge/discharge cycle of a battery and formation of a solid electrolyte interface (SEI) layer by side reaction of an electrode. Thus, life span and reliability of a battery may be reduced. In addition, when a nano-sized silicon material is used as an electrode material, volume expansion of an electrode according to an increase in charge/discharge cycle may be easily controlled as compared with a case in which a micro-sized bulk silicon material is used as an electrode material. However, in this case, processes of manufacturing the electrode material may be complicated to increase a process cost and a process time. In addition, an incidence of side reaction may be high since a specific surface area is high. Furthermore, a tap density may be low, and thus it may be difficult to manufacture an electrode having high capacity.

However, according to the aforementioned embodiments of the inventive concepts, the aggregate of the silicon particles 105 and the carbon material 300 may be fractured by the spex mill or the mixer mill and may be re-aggregated by the cold-welding to form the third composite 40. In the process of forming the third composite 40, physical and chemical characteristics of the surfaces of the silicon particles 105 may be changed to lower the oxidation reactivity with air. Thus, the performance of the battery may be improved. In addition, the silicon particles 105 and the carbon material 300 may be uniformly mixed with each other, and thus the electrical conductivity of the silicon particles 105 may be improved. Furthermore, the size of the third composite 40 may be easily adjusted by adjusting the frequency and/or the mixing time of the spex mill or the mixer mill. As a result, it is possible to provide the electrode material which has the improved electrical conductivity, the improved life span characteristic, the high tap density, and the high composite density, and a secondary battery including the electrode material.

Evaluation results of characteristics of the electrode material manufactured according to the aforementioned embodiments of the inventive concepts will be described hereinafter.

### Manufacture of electrode material according to embodiment

An aggregate in which silicon monoxide powder was aggregated was thermally treated in a reducing furnace at 970 degrees Celsius for 30 hours to reduce at least a portion of the silicon monoxide powder to silicon powder. Thus, a first aggregate in which the silicon monoxide powder and the silicon powder were aggregated was formed. After the thermal treatment, the first aggregate was immersed in a hydrogen fluoride (HF) solution for 4 hours to selectively remove the silicon monoxide powder remaining in the first aggregate, and thus a second aggregate corresponding to an aggregate of silicon powder was formed. The second aggregate was obtained through a filtering process, and then, the second aggregate and carbon nanotube (CNT) were mix-milled by a mixer mill to form a third aggregate (i.e., a third composite).

The third composites (i.e., pristine Si-CNT composites) were formed using 10wt%, 15wt% and 20wt% of carbon nanotubes (CNTs), different frequencies (10Hz, 20Hz and 30Hz) of the mixer mill, and different mixing times (15 minutes, 30 minutes and 45 minutes) of the mixer mill.

### Manufacture of electrode material according to comparative example

An aggregate (i.e., pristine Si) of silicon powder was formed using silicon monoxide by substantially the same method as in the embodiment described above.

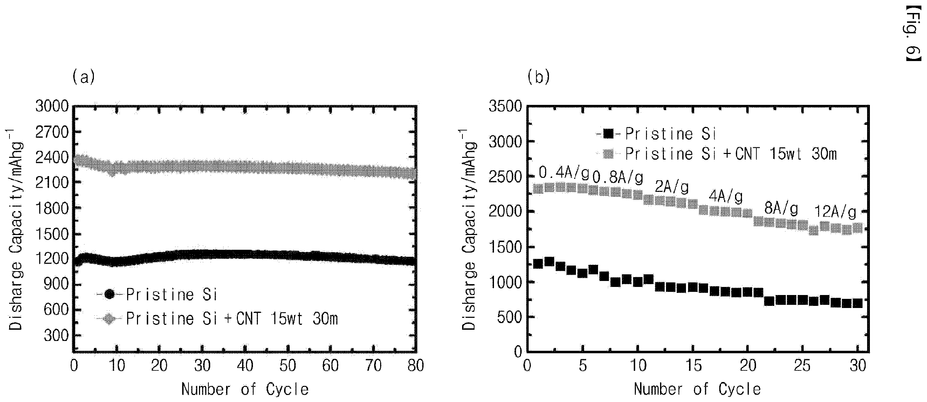

FIG. 6 shows graphs of charge/discharge characteristics according to an increase in the number of charge/discharge cycle and an increase in current value of batteries including electrode materials according to an embodiment of the inventive concepts and a comparative example. In detail, a graph (a) of FIG. 6 shows charge/discharge characteristics according to the increase in the number of the charge/discharge cycles of the batteries, and a graph (b) of FIG. 6 shows charge/discharge characteristics according to the increase in current value of the batteries.

Referring to FIG. 6, discharge capacity values according to the increase in the number of the charge/discharge cycles of the batteries manufactured using the pristine Si according to the comparative example and the pristine Si-CNT composite according to the embodiment were measured. A weight ratio of the carbon nanotube of the pristine Si-CNT composite was 15wt%, and a mixing time of the second aggregate and the carbon nanotube by the mixer mill was 30 minutes.

The graph (a) of FIG. 6 shows the charge/discharge characteristics according to the increase in the number of the charge/discharge cycles of the batteries, as described above. In the graph (a) of FIG. 6, the discharge capacity values according to the increase in the number of the charge/discharge cycles of the battery including the pristine Si-CNT composite of the embodiment are maintained at 2120mAhg⁻¹ or more. On the contrary, the discharge capacity values according to the increase in the number of the charge/discharge cycles of the battery including the pristine Si of the comparative example are about 1100mAhg⁻¹. As a result, the discharge capacity values according to the increase in the number of the charge/discharge cycles of the battery including the pristine Si-CNT composite of the embodiment of the inventive concepts are greater than the discharge capacity values according to the increase in the number of the charge/discharge cycles of the battery including the pristine Si of the comparative example. Thus, the charge/discharge characteristics of the pristine Si-CNT composite are superior to those of the pristine Si.

The graph (b) of FIG. 6 shows the charge/discharge characteristics according to the increase in current value of the batteries and shows rate characteristics of the embodiment and the comparative example. In the case of the pristine Si, 721.2 mAhg⁻¹ is shown at 12 Ag⁻¹, and 57.3 % is shown as compared with 400 mAg⁻¹. In the case of the pristine Si-CNT composite, 1726.9 mAhg⁻¹ is shown at 12 Ag⁻¹, and 74.5 % is shown as compared with 400 mAg⁻¹. Thus, a rate characteristic of the pristine Si-CNT composite is superior to that of the pristine Si.

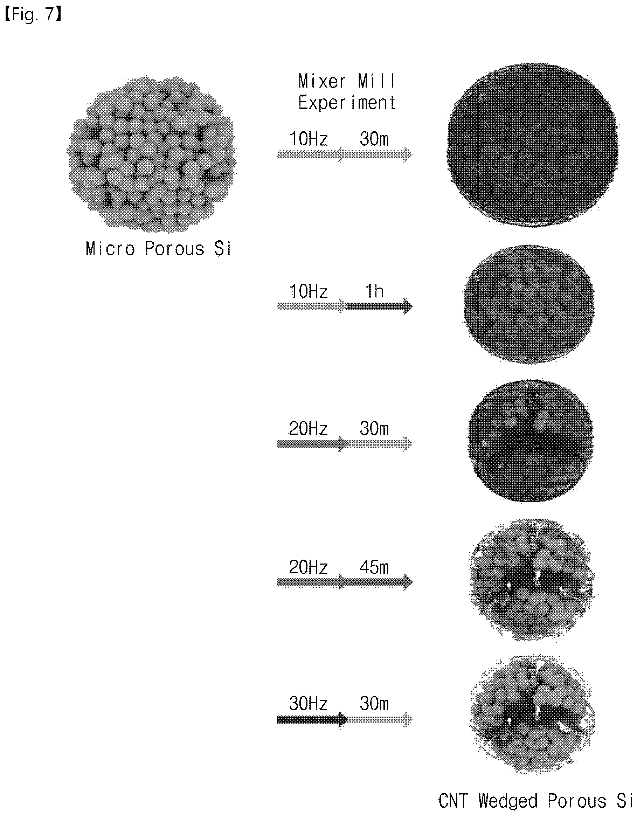

FIG. 7 shows shapes of an electrode material according to a frequency and a mixing time of a mixer mill in manufacturing of the electrode material according to embodiments of the inventive concepts.

The pristine Si-CNT composites were formed using different frequencies (10Hz, 20Hz, and 30Hz) of the mixer mill and different mixing times (30 minutes, 45 minutes, and 60 minutes) of the mixer mill, according to the embodiment of the inventive concepts. Thereafter, shapes of the pristine Si-CNT composites were observed.

Referring to FIG. 7, the carbon material and the aggregate of the silicon particles are uniformly mixed with each other in the pristine Si-CNT composite formed under the condition that the frequency of the mixer mill was 20Hz and the mixing time of the mixer mill was 30 minutes. Thus, when the pristine Si-CNT composite is formed under the condition that the frequency of the mixer mill is 20Hz and the mixing time of the mixer mill is 30 minutes, the electrical conductivity of the pristine Si-CNT composite may be improved and the tap density of the pristine Si-CNT composite may be increased.

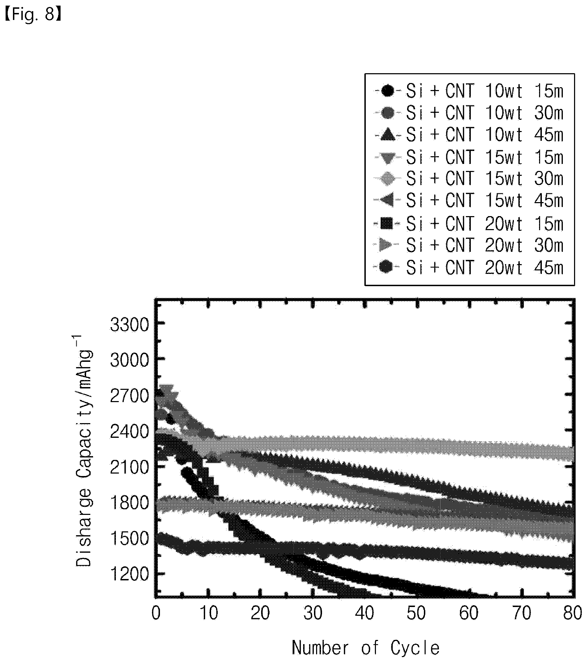

FIG. 8 is a graph showing charge/discharge characteristics according to a weight of carbon nanotube and a mixing time of a mixer mill as the number of charge/discharge cycles increases.

The pristine Si-CNT composites were formed using 10wt%, 15wt% and 20wt% of carbon nanotubes and different mixing times (15 minutes, 30 minutes, and 45 minutes) of the mixer mill. At this time, the frequencies of the mixer mill were fixed at 20Hz. Thereafter, discharge capacity values according to the increase in the number of charge/discharge cycles of batteries including the pristine Si-CNT composites were measured.

Referring to FIG. 8, in a case in which the weight ratio of the carbon nanotube is 15wt% and the mixing time of the mixer mill is 30 minutes, the discharge capacity value has a maximum value of 2360mAhg⁻¹ and is little changed as the number of the charge/discharge cycles of the battery increases. Next, the discharge capacity value according to the increase in the number of the charge/discharge cycles of the battery becomes greater in the order of a case of 10wt% of carbon nanotube and the mixing time of 45 minutes, a case of 10wt% of carbon nanotube and the mixing time of 30 minutes, a case of 15wt% of carbon nanotube and the mixing time of 45 minutes, a case of 20wt% of carbon nanotube and the mixing time of 30 minutes, a case of 15wt% of carbon nanotube and the mixing time of 15 minutes, a case of 20wt% of carbon nanotube and the mixing time of 45 minutes, a case of 10wt% of carbon nanotube and the mixing time of 15 minutes, and a case of 20wt% of carbon nanotube and the mixing time of 15 minutes. As a result, the discharge capacity value according to the increase in the number of the charge/discharge cycles of the battery is greatest in the case in which the pristine Si-CNT composite according to the embodiment of the inventive concepts is formed under the condition that the frequency of the mixer mill is 20Hz, the weight ratio of the carbon nanotube is 15wt%, and the mixing time of the mixer mill is 30 minutes.

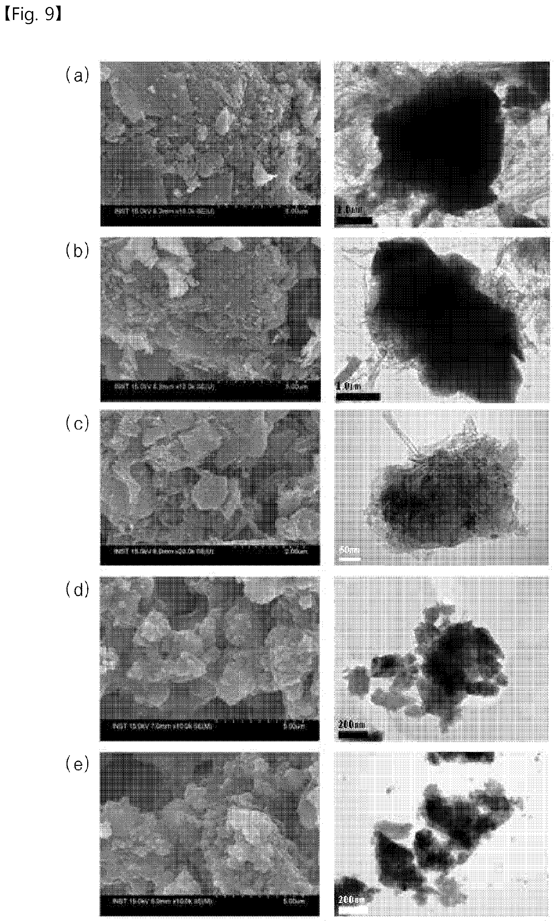

FIG. 9 shows scanning electron microscope (SEM) and transmission electron microscope (TEM) images of electrode materials according to embodiments of the inventive concepts. In detail, images (a) of FIG. 9 are SEM and TEM images of a pristine Si-CNT composite formed under the condition that the weight ratio of the carbon nanotube was 15wt%, the frequency of the mixer mill was 10Hz, and the mixing time of the mixer mill was 30 minutes. Images (b) of FIG. 9 are SEM and TEM images of a pristine Si-CNT composite formed under the condition that the weight ratio of the carbon nanotube was 15wt%, the frequency of the mixer mill was 10Hz, and the mixing time of the mixer mill was 60 minutes. Images (c) of FIG. 9 are SEM and TEM images of a pristine Si-CNT composite formed under the condition that the weight ratio of the carbon nanotube was 15wt%, the frequency of the mixer mill was 20Hz, and the mixing time of the mixer mill was 30 minutes. Images (d) of FIG. 9 are SEM and TEM images of a pristine Si-CNT composite formed under the condition that the weight ratio of the carbon nanotube was 15wt%, the frequency of the mixer mill was 20Hz, and the mixing time of the mixer mill was 45 minutes. Images (e) of FIG. 9 are SEM and TEM images of a pristine Si-CNT composite formed under the condition that the weight ratio of the carbon nanotube was 15wt%, the frequency of the mixer mill was 30Hz, and the mixing time of the mixer mill was 30 minutes.

The pristine Si-CNT composites were formed using different frequencies (10Hz, 20Hz, and 30Hz) of the mixer mill and different mixing times (30 minutes, 45 minutes, and 60 minutes) of the mixer mill under the condition that the weight ratio of the carbon nanotube was fixed at 15wt%, according to embodiments of the inventive concepts.

Surface images and three-dimensional (3D) images of the pristine Si-CNT composites formed according to the aforementioned embodiments were obtained using a SEM apparatus and a TEM apparatus.

Referring to the images (a), (b), (c), (d) and (e) of FIG. 9, the carbon nanotube is formed in an irregular shape on a surface of the pristine Si. In particular, the shape of the carbon nanotube is maintained and the carbon nanotube forms the composite with the pristine Si in the pristine Si-CNT composite formed under the condition that the weight ratio of the carbon nanotube was 15wt%, the frequency of the mixer mill was 20Hz, and the mixing time of the mixer mill was 30 minutes. As a result, it is recognized that 15wt% of the carbon nanotube, the mixer mill frequency of 20Hz and the mixer mill mixing time of 30 minutes are the optimized conditions for forming the pristine Si-CNT composite.

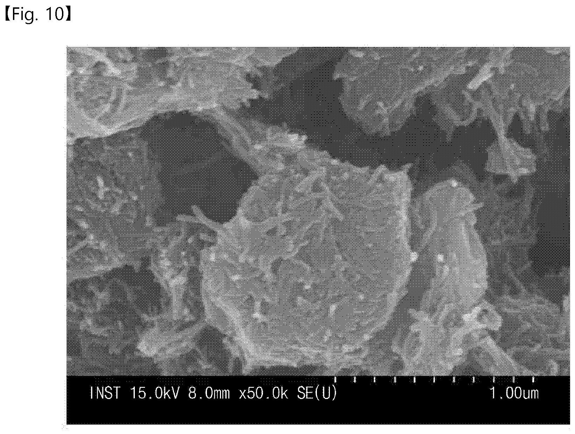

FIG. 10 is an enlarged SEM image of (c) of FIG. 9 to show an electrode material according to an embodiment of the inventive concepts. In detail, FIG. 10 is a SEM image of the pristine Si-CNT composite formed under the condition that the weight ratio of the carbon nanotube was 15wt%, the frequency of the mixer mill was 20Hz, and the mixing time of the mixer mill was 30 minutes.

Referring to FIG. 10, the shape of the carbon nanotube is maintained and the carbon nanotube forms the composite with the pristine Si in the pristine Si-CNT composite formed under the condition that the weight ratio of the carbon nanotube was 15wt%, the frequency of the mixer mill was 20Hz, and the mixing time of the mixer mill was 30 minutes.

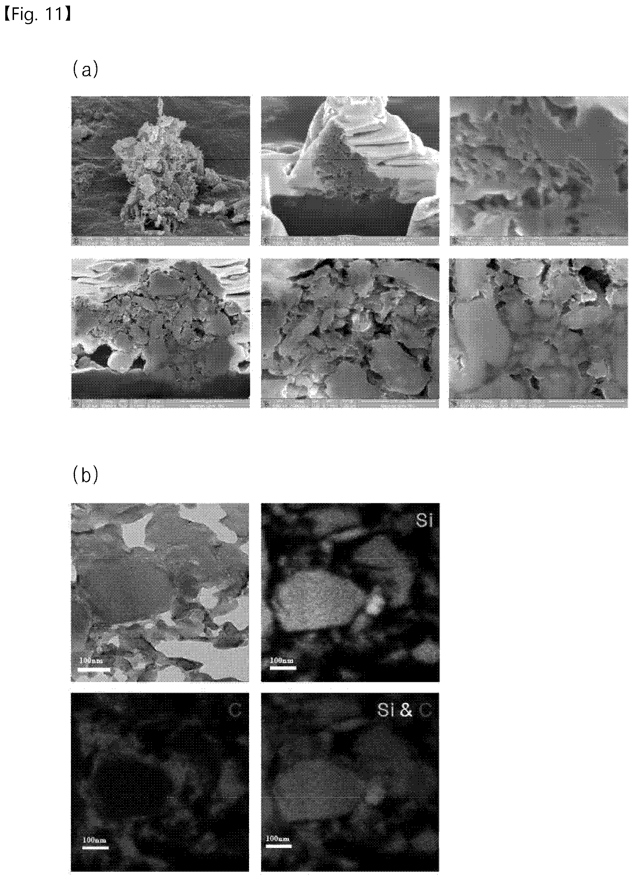

FIG. 11 shows FIB-SEM and FIB-TEM images of an electrode material according to an embodiment of the inventive concepts. In detail, images (a) of FIG. 11 are focused ion beam-scanning electron microscope (FIB-SEM) images of the pristine Si-CNT composite, and images (b) of FIG. 11 are focused ion beam-transmission electron microscope (FIB-TEM) images of the pristine Si-CNT composite.

The pristine Si-CNT composite was formed under the condition that the weight ratio of the carbon nanotube was 15wt%, the frequency of the mixer mill was 20Hz, and the mixing time of the mixer mill was 30 minutes, according to the embodiment of the inventive concepts.

Cross-sectional images and cross-sectional 3D images of the pristine Si-CNT composite formed according to the embodiment described above were obtained using a FIB-SEM apparatus and a FIB-TEM apparatus.

Referring to the images (a) of FIG. 11, the carbon nanotubes are in contact with a surface of the pristine Si aggregate and are provided between the particles of the pristine Si aggregate. In addition, voids not filled with the carbon nanotubes exist between the particles of the pristine Si aggregate. As described with reference to the images (a) of FIG. 11, the porous shape of the pristine Si-CNT composite is shown in the images (b) of FIG. 11. Thus, the porous pristine Si-CNT composite may be easily formed under the condition that the weight ratio of the carbon nanotube is 15wt%, the frequency of the mixer mill is 20Hz, and the mixing time of the mixer mill is 30 minutes, according to the embodiment of the inventive concepts. In the FIB-SEM and FIB-TEM images of the pristine Si-CNT composite, the voids are generated during fracturing and re-aggregation of the silicon and the carbon nanotube in the cold-welding process. The voids may control a phenomenon that silicon particles are broken and unstable by volume expansion of silicon which may occur during charge/discharge reaction.

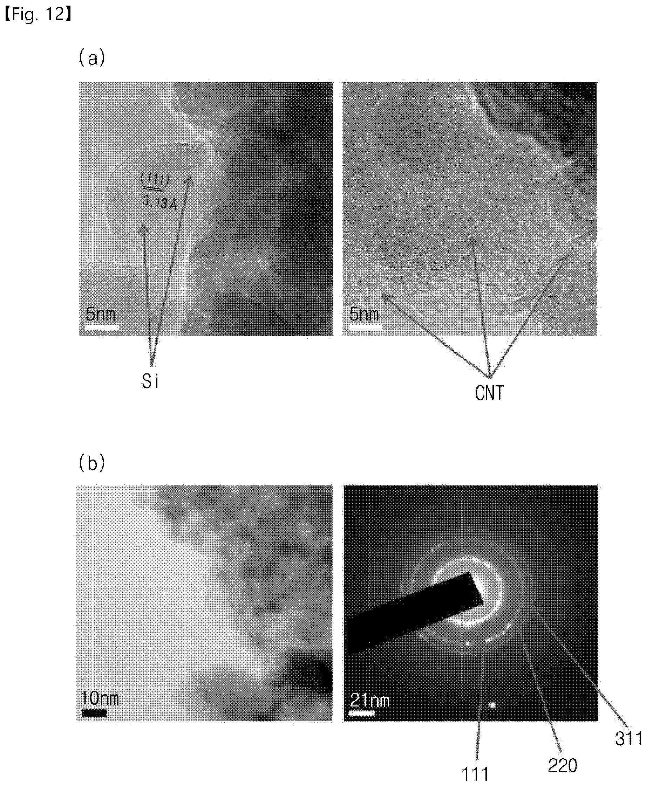

FIG. 12 shows TEM and HRTEM images of an electrode material according to an embodiment of the inventive concepts. In detail, images (a) of FIG. 12 are TEM images of the pristine Si-CNT composite, and images (b) of FIG. 12 are high-resolution transmission electron microscope (HRTEM) images of the pristine Si-CNT composite.

Images of the pristine Si-CNT composite formed according to the embodiment described above were obtained using a TEM apparatus and a HRTEM apparatus.

Referring to the images (a) of FIG. 12, in TEM analysis of the pristine Si-CNT composite, a size of the pristine Si-CNT composite ranges from about 10nm to about 15nm, and (111), (220) and (311) crystal planes shown in a silicon crystal are checked through a SAED pattern.

As shown in the images (b) of FIG. 12, in HRTEM analysis of the pristine Si-CNT composite, the (111) crystal plane and the carbon nanotube exist in the pristine Si-CNT composite, like the TEM analysis of the pristine Si-CNT composite.

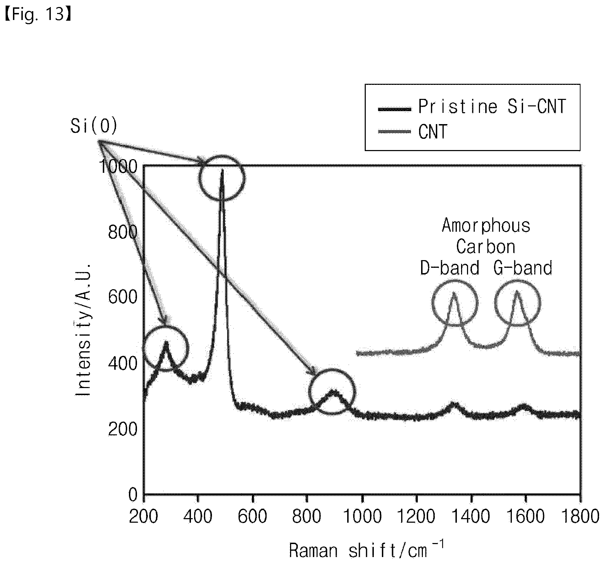

FIG. 13 is a Raman analysis graph of carbon nanotube and an electrode material according to an embodiment of the inventive concepts.

Light was irradiated to the pristine Si-CNT composite according to the embodiment and carbon nanotube, and emission intensity according to a change in wavelength of the light was measured.

Referring to FIG. 13, intensity peaks of silicon (Si) and carbon (C) are shown in a Raman graph of the pristine Si-CNT composite. Thus, it is recognized that silicon (Si) and the carbon nanotube exist in the pristine Si-CNT composite.

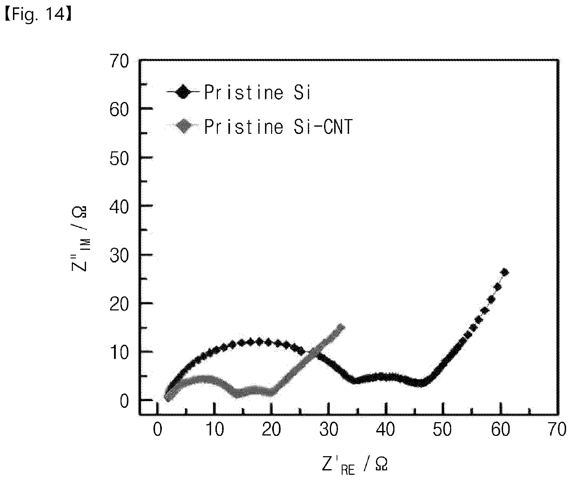

FIG. 14 is an impedance graph of electrode materials according to an embodiment of the inventive concepts and a comparative example.

1 cycle of each of batteries including the embodiment (the pristine Si-CNT composite) and the comparative example (pristine Si) was performed, and then, an impedance value was measured.

Referring to FIG. 14, a charge transfer resistance value (Z'_{RE}) of the pristine Si-CNT composite is greater than a charge transfer resistance value (Z'_{RE}) of the pristine Si. Thus, it is recognized that a resistance to charge transfer in an electrode of the pristine Si-CNT composite according to the embodiment of the inventive concepts is less than a resistance to charge transfer in an electrode of the pristine Si according to the comparative example. In other words, diffusion of an electrolyte and transfer of charges may be easier in the electrode manufactured using the pristine Si-CNT composite according to the embodiment of the inventive concepts than in the electrode manufactured using the pristine Si according to the comparative example.

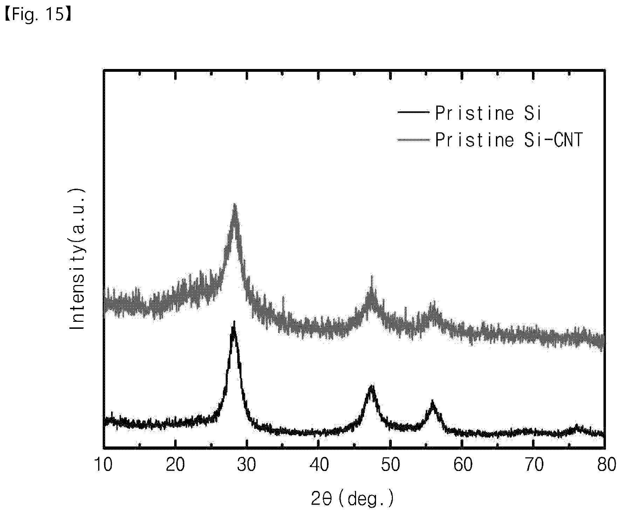

FIG. 15 is an X-ray diffraction (XRD) graph of electrode materials according to an embodiment of the inventive concepts and a comparative example.

Intensities according to X-ray absorption of the embodiment (the pristine Si-CNT composite) and the comparative example (the pristine Si) were measured using an XRD apparatus.

(111), (220) and (311) crystal peaks shown in a FCC silicon crystal are shown in the embodiment of the inventive concepts and the comparative example. In addition, an amorphous carbon peak having a wide width is shown in a range of 20 degrees to 25 degrees by carbon coating in the embodiment of the inventive concepts. Furthermore, in the embodiment of the inventive concepts, the crystalline peak becomes wider by an increase in lattice deformation by the mixer mill.

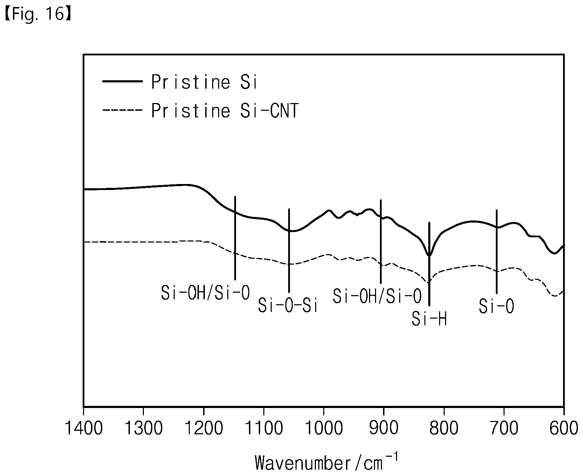

FIG. 16 is a Fourier transform infrared (FT-IR) graph of electrode materials according to an embodiment of the inventive concepts and a comparative example.

Intensities according to a wavelength by infrared absorption of the pristine Si-CNT composite and the pristine Si were measured using a FT-IR apparatus.

Referring to FIG. 16, a Si-H peak and a Si-O-Si peak which show a silicon oxide-based material (e.g., silicon monoxide or silicon dioxide) are smaller in the pristine Si-CNT composite than in the pristine Si. The reduction of the Si-H peak and the Si-O-Si peak showing the silicon oxide-based material means that silicon oxide causing side reaction is reduced by generation of a new interface and the increase in lattice deformation. Thus, efficiency of an initial cycle may be increased, and the side reaction lowering efficiency of a battery may be reduced. As a result, it is recognized that performance of a battery including the pristine Si-CNT composite is superior to that of a battery including the pristine Si.

The following table 1 shows measured values of tap densities, specific capacities and volumetric capacities of nano-Si, graphite, C-Si CVD, C₂H₂ coated porous Si and pristine Si according to comparative examples and measured values of a tap density, a specific capacity and a volumetric capacity of the pristine Si-CNT composite (CNT: 15wt%) according to the embodiment of the inventive concepts.

**[Table 1]**

| Classification | tap density (g/cm³) | specific capacity (mAh/g) | volumetric capacity (mAh/cm³) |
|---|---|---|---|
| Nano-Si | 0.16 | 1800 | 288 |
| Graphite | 1.16 | 360 | 418 |
| C-Si CVD | 0.49 | 1950 | 956 |
| C₂H₂ coated porous Si | 0.78 | 1544 | 1204 |
| Pristine Si | 0.285 | 1170 | 333 |
| Pristine Si-CNT composite (CNT 15wt%) | 1.103 | 2364 | 2607 |

Referring to the table 1, the tap density of the pristine Si-CNT composite according to the embodiment of the inventive concepts is about 1.1g/cm³, the specific capacity of the pristine Si-CNT composite is about 2300 mAh/cm³, and the volumetric capacity of the pristine Si-CNT composite is about 2600 mAh/cm³. Thus, the tap density, the specific capacity and the volumetric capacity of the pristine Si-CNT composite formed according to the embodiment of the inventive concepts are greater than those of the pristine Si according to the comparative example. As a result, since the pristine Si-CNT composite according to the embodiment of the inventive concepts has the high tap density, the high specific capacity and the high volumetric capacity, a high-capacity battery may be manufactured using the pristine Si-CNT composite according to the embodiment of the inventive concepts.

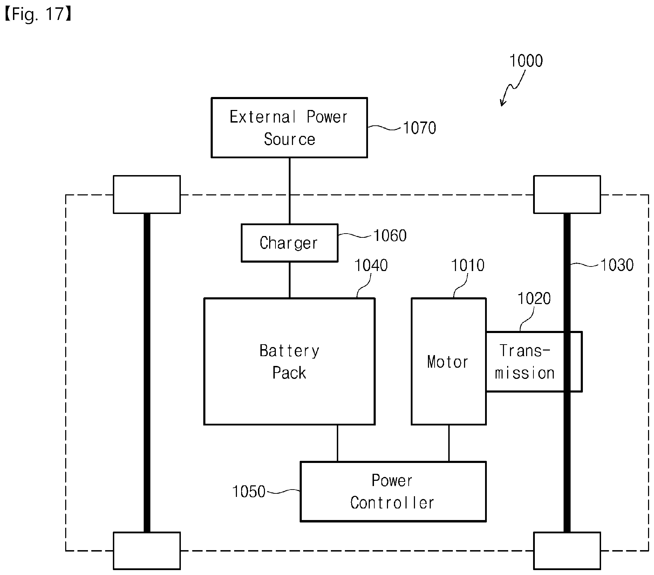

FIG. 17 is a schematic block diagram illustrating a car including a secondary battery to which an electrode material according to some embodiments of the inventive concepts is applied.

Referring to FIG. 17, a car 1000 including a secondary battery to which the electrode material according to the embodiments of the inventive concepts is applied may include a motor 1010, a transmission 1020, an axle 1030, a battery pack 1040, and at least one of a power controller 1050 or a charger 1060.

The motor 1010 may convert electric energy of the battery pack 1040 into kinetic energy. The motor 1010 may provide the converted kinetic energy to the axle 1030 through the transmission 1020. The motor 1010 may include a single motor or a plurality of motors. For example, in the event that the motor 1010 includes the plurality of motors, the motor 1010 may include a front motor for supplying the kinetic energy to a front axle and a rear motor for supplying the kinetic energy to a rear axle.

The transmission 1020 may be located between the motor 1010 and the axle 1030. The transmission 1020 may change the kinetic energy provided from the motor 1010 to meet a driving environment desired by a driver and may provide the changed kinetic energy to the axle 1030.

The battery pack 1040 may store electric energy provided from the charger 1060 and may provide the stored electric energy to the motor 1010. The battery pack 1040 may directly provide the electric energy to the motor 1010 and/or may provide the electric energy to the motor 1010 through the power controller 1050.

At this time, the battery pack 1040 may include at least one battery cell. In addition, the battery cell may include the electrode material according to the aforementioned embodiments of the inventive concepts. However, embodiments of the inventive concepts are not limited thereto. In certain embodiments, the battery cell may further include at least one of other various kinds of secondary batteries such as lithium-based secondary batteries. Meanwhile, the battery cell may mean an individual battery, and the battery pack may mean a battery cell assembly in which battery cells are connected to each other to have desired voltage and/or capacity.

The power controller 1050 may control the battery pack 1040. In other words, the power controller 1050 may control the batter pack 1040 to allow the power transmitted from the battery pack 1040 to the motor 1010 to have desired voltage, current and/or waveform. To achieve this, the power controller 1050 may include at least one of a passive power device or an active power device.

The charger 1060 may receive power from an external power source 1070 and may provide the power to the battery pack 1040. The charger 1060 may wholly control a charging state. For example, the charger 1060 may control on/off of charging and a charging rate.

As described above, when the composite of the carbon material and the porous aggregate of silicon powder is used as the electrode material, the volume expansion of the silicon particles by the increase in the number of the charge/discharge cycles of the battery may be easily controlled, and the electrical conductivity of the electrode may be greatly improved by the carbon material. As a result, the electrode material capable of manufacturing a high-reliable and high-capacity battery may be provided.

The electrode material according to the embodiments of the inventive concepts may be used in secondary batteries, and the secondary battery including the electrode material according to the embodiments of the inventive concepts may be used in various technical fields such as portable electronic devices, cars, and industrial facilities.

The method for manufacturing the electrode material according to some embodiments of the inventive concepts may include preparing silicon oxide, reducing at least a portion of the silicon oxide to form a first composite including an aggregate in which silicon oxide particles and silicon particles are aggregated, selectively removing the silicon oxide particles of the first composite to form a second composite including an aggregate in which the silicon particles are aggregated, and forming a third composite by dry-mixing and cold-welding the second composite and a carbon material.

In the process of forming the third composite, the aggregate of the silicon particles may be fractured and re-aggregated. Thus, the aggregate of the silicon particles in the third composite may have the micro size and may include the nano-sized silicon particles. As a result, the tap density and the composite density of the electrode formed using the third composite may be improved and the volume expansion of the silicon particles may be controlled. Accordingly, a long-life, high-reliable and high-capacity secondary battery may be realized.

In addition, according to some embodiments of the inventive concepts, the aggregate of the silicon particles in the second composite and the carbon material may be dry-mixed and cold-welded using the spex mill or the mixer mill to form the third composite. Thus, the carbon material and the aggregate of the silicon particles may be uniformly mixed with each other. In addition, the size of the third composite may be easily adjusted by adjusting the frequency and/or the mixing time of the spex mill or the mixer mill. Thus, it is possible to provide the electrode material having the improved electrical conductivity and the high tap density, and the secondary battery including the electrode material.

While the inventive concepts have been described with reference to exemplary embodiments, it will be apparent to those skilled in the art that various changes and modifications may be made without departing from the spirits and scopes of the inventive concepts. Therefore, it should be understood that the above embodiments are not limiting, but illustrative. Thus, the scopes of the inventive concepts are to be determined by the broadest permissible interpretation of the following claims and their equivalents, and shall not be restricted or limited by the foregoing description.

## Claims

1. A method for manufacturing an electrode material, the method comprising:
preparing silicon oxide;
reducing at least a portion of the silicon oxide to form a first composite including an aggregate in which silicon oxide particles and silicon particles are aggregated;
selectively removing the silicon oxide particles of the first composite to form a second composite including an aggregate in which the silicon particles are aggregated; and
forming a third composite by dry-mixing and cold-welding the second composite and a carbon material.

2. The method of claim 1, wherein the third composite includes an aggregate of the silicon particles and the carbon material mixed with the aggregate of the silicon particles.

3. The method of claim 1, wherein the reducing of at least a portion of the silicon oxide to form the first composite comprises:
thermally treating the silicon oxide to reduce at least a portion of the silicon oxide to the silicon particles.

4. The method of claim 1, wherein the selective removing of the silicon oxide particles of the first composite to form the second composite comprises:
performing a wet etching process to remove the silicon oxide particles of the first composite while leaving the silicon particles of the first composite.

5. The method of claim 1, wherein the second composite includes voids formed by the removal of the silicon oxide particles and an aggregate of the remaining silicon particles.

6. The method of claim 1, wherein the aggregate in which the silicon particles are aggregated is fractured and re-aggregated during the dry-mixing and the cold-welding of the second composite and the carbon material.

7. The method of claim 1, wherein the forming of the third composite comprises:
dry-mixing and cold-welding the second composite and the carbon material in such a way that the carbon material is adhered to the aggregate of the silicon particles or at least a portion of the carbon material is inserted into the aggregate of the silicon particles.

8. The method of claim 7, wherein the forming of the third composite comprises:
dry-mixing and cold-welding the second composite and the carbon material by a spex mill or a mixer mill.

9. The method of claim 8, wherein a size of the carbon material decreases as a frequency and/or a mixing time of the spex mill or the mixer mill increases.

10. The method of claim 8, wherein a size of the formed third composite decreases as a frequency and/or a mixing time of the spex mill or the mixer mill increases.

11. An electrode material comprising:
a porous silicon aggregate; and
a carbon material adhered to a surface of the porous silicon aggregate and permeating into the porous silicon aggregate.

12. The electrode material of claim 11, wherein a weight ratio of the carbon material is 15wt%.

13. The electrode material of claim 11, wherein the porous silicon aggregate has a micro size, and nano-sized silicon particles are aggregated in the porous silicon aggregate.
